# EUROPEAN PATENT APPLICATION

(11) **EP 4 738 567 A1**
(43) Date of publication of application: **06.05.2026**
(21) Application number: 25205170.1
(22) Date of filing: 29.09.2025
(51) Int. Cl.: H01M 50/209, H01M 50/367, H01M 50/519, H01M 10/613

(54) **POWER STORAGE DEVICE**

(30) Priority: 30.10.2024 JP 2024190805
(71) Applicant: TOYOTA JIDOSHA KABUSHIKI KAISHA, Toyota-shi, Aichi-ken 471-8571 (JP)
(72) Inventor: TSUNEKAWA, Kunihiro, Toyota-shi, Aichi-ken,, 471-8571 (JP); NAKADA, Koki, Toyota-shi, Aichi-ken,, 471-8571 (JP); TAKESHITA, Shinya, Toyota-shi, Aichi-ken,, 471-8571 (JP); TAKAHASHI, Naoyuki, Toyota-shi, Aichi-ken,, 471-8571 (JP); KIMURA, Ryo, Toyota-shi, Aichi-ken,, 471-8571 (JP); KATO, Kazuhito, Toyota-shi, Aichi-ken,, 471-8571 (JP); SHIMONAKA, Toshihiro, Toyota-shi, Aichi-ken,, 471-8571 (JP); ICHISAWA, Kota, Toyota-shi, Aichi-ken,, 471-8571 (JP); MIYAHARA, Kenta, Toyota-shi, Aichi-ken,, 471-8571 (JP)
(74) Representative: Winter, Brandl - Partnerschaft mbB

(57) **Abstract**

A power storage device (B) includes: a first power storage cell (10, 1(6)); a second power storage cell (10, 2(6)); and a wiring board (200). The wiring board includes a substrate (201, 201A to 201G), and a plurality of conductor members (211 to 216, 221 to 223, 231 to 236) provided on a vertically upper surface (F1) of the substrate. The plurality of conductor members include a first conductor member (211) and a second conductor member (212). The first power storage cell includes, on a vertically lower surface (F10) thereof, a first electrode terminal (11) connected to the first conductor member. The second power storage cell includes, on a vertically lower surface (F10) thereof, a second electrode terminal (12) connected to the second conductor member. At least one of a protrusion (M1, M21, M22), a recess (R10, R10A) and a through hole (h22, h22A, h22B) is provided in a portion of the substrate between the first electrode terminal and the second electrode terminal.

## Description

### CROSS REFERENCE TO RELATED APPLICATIONS

This nonprovisional application is based on Japanese Patent Application No. 2024-190805 filed on October 30, 2024 with the Japan Patent Office, the entire contents of which are hereby incorporated by reference.

### BACKGROUND

### Field

The present disclosure relates to a power storage device including a plurality of power storage cells.

### Description of the Background Art

Chinese Patent Laying-Open No. 116686151 discloses a power storage device including a plurality of power storage cells fixed in a case (accommodation cavity). An electrode terminal of each of the power storage cells is provided to face a bottom wall of the case.

### SUMMARY

In the power storage device described in Chinese Patent Laying-Open No. 116686151, water generated in the case due to condensation or the like may cause a short circuit between the electrode terminals of the power storage cells adjacent to each other.

The present disclosure has been made to solve the above-described problem and an object thereof is to provide a power storage device in which a short circuit between electrode terminals of power storage cells adjacent to each other is less likely to occur.

According to the present disclosure, a power storage device described below is provided.

(Clause 1) The power storage device includes: a first power storage cell; a second power storage cell; and a wiring board. The wiring board includes a substrate, and a plurality of conductor members provided on a vertically upper surface of the substrate. The plurality of conductor members include a first conductor member and a second conductor member. The first power storage cell includes, on a vertically lower surface thereof, a first electrode terminal connected to the first conductor member. The second power storage cell includes, on a vertically lower surface thereof, a second electrode terminal connected to the second conductor member. At least one of a protrusion, a recess and a through hole is provided in a portion of the substrate between the first electrode terminal and the second electrode terminal.

According to the above-described configuration, even when water is generated in one power storage cell of the power storage cells (the first power storage cell and the second power storage cell) adjacent to each other, spreading of the water to the other power storage cell is suppressed. This makes it less likely to cause a short circuit between the electrode terminals of the power storage cells adjacent to each other.

(Clause 2) In the power storage device according to Clause 1, one or more through holes are formed in the portion of the substrate between the first electrode terminal and the second electrode terminal.

The presence of the one or more through holes between the electrodes of the power storage cells adjacent to each other makes it less likely to cause a short circuit between the electrode terminals due to water.

(Clause 3) In the power storage device according to Clause 2, the substrate includes one or more first portions located at edge portions of the one or more through holes, and a second portion higher in degree of hydrophobicity than the first portions.

Since the first portions are located at the edge portions of the through holes, water between the electrodes is more easily guided to the through holes.

(Clause 4) In the power storage device according to Clause 2 or 3, the substrate includes a first inclined portion inclined downward from the first electrode terminal toward the one or more through holes, and a second inclined portion inclined downward from the second electrode terminal toward the one or more through holes.

By the first inclined portion and the second inclined portion, water between the electrodes is more easily guided to the through holes.

(Clause 5) In the power storage device according to any one of Clauses 2 to 4, a recess is formed in the portion of the substrate between the first electrode terminal and the second electrode terminal, and the one or more through holes are formed in the recess.

According to the above-described configuration, the presence of the recess and the through holes between the electrodes of the power storage cells adjacent to each other makes it less likely to cause a short circuit between the electrode terminals due to water.

(Clause 6) In the power storage device according to any one of Clauses 2 to 5, the power storage device includes a gas discharge path through which a gas discharged from each of the first power storage cell and the second power storage cell flows. The one or more through holes communicate with the gas discharge path.

According to the above-described configuration, water falling into the through holes is more easily discharged together with the gas.

(Clause 7) In the power storage device according to Clause 6, a water absorbing member is provided between the one or more through holes and the gas discharge path.

By the water absorbing member, an amount of water (liquid) falling into the gas discharge path can be reduced.

(Clause 8) In the power storage device according to Clause 6 or 7, each of the first power storage cell and the second power storage cell further includes an explosion-proof valve on the vertically lower surface thereof. The substrate is located on a vertically lower side of the explosion-proof valve of each of the first power storage cell and the second power storage cell. The gas discharge path is located on a vertically lower side of the substrate. A cooler is provided on a vertically lower surface of the substrate.

By the cooler, the gas discharged from around the explosion-proof valve and from the explosion-proof valve is more easily cooled.

(Clause 9) In the power storage device according to any one of Clauses 1 to 8, one or more protrusions are formed in the portion of the substrate between the first electrode terminal and the second electrode terminal.

The presence of the protrusions between the electrodes of the power storage cells adjacent to each other makes it less likely to cause a short circuit between the electrode terminals due to water. The protrusions may be applied together with the recess and/or the through holes.

A vehicle including the power storage device according to any one of Clauses 1 to 9 may be provided as another embodiment.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a vehicle including a power storage device according to an embodiment of the present disclosure.
Fig. 2 is a diagram showing a schematic configuration of the power storage device according to the embodiment of the present disclosure.
Fig. 3 is a diagram of the inside of a lower case of the power storage device according to the present embodiment when viewed from above.
Fig. 4 is a diagram showing the lower case of the power storage device according to the present embodiment in an empty state.
Fig. 5 is a diagram showing an exemplary configuration of a power storage cell according to the present embodiment.
Fig. 6 is a diagram of each power storage cell in the lower case shown in Fig. 3 when viewed from below.
Fig. 7 is a diagram showing an exemplary configuration of a wiring board in the lower case shown in Fig. 3.
Fig. 8 is an end view of the power storage device taken along line VIII-VIII in Fig. 3.
Fig. 9 is an end view of the power storage device taken along line IX-IX in Fig. 3.
Fig. 10 is an end view of the power storage device taken along line X-X in Fig. 3.
Fig. 11 is an end view of the power storage device taken along line XI-XI in Fig. 3.
Fig. 12 is a diagram for illustrating a cross-sectional structure of the wiring board shown in Fig. 7.
Fig. 13 is an end view of the power storage device taken along line XIII-XIII in Fig. 3.
Fig. 14 is a diagram showing a modification of a recess shown in Fig. 13.
Fig. 15 is a diagram showing an example in which the recess shown in Fig. 13 is not formed.
Fig. 16 is a diagram showing an example in which a plurality of through holes shown in Fig. 13 are formed.
Fig. 17 is a diagram showing a first modification of an opening of a substrate shown in Fig. 13.
Fig. 18 is a diagram showing a second modification of the opening of the substrate shown in Fig. 13.
Fig. 19 is a diagram showing an example in which the substrate shown in Fig. 13 includes a cooler.
Fig. 20 is a diagram showing an example in which the substrate shown in Fig. 13 includes a water absorbing member.
Fig. 21 is a diagram showing a first example in which the through hole shown in Fig. 13 is replaced with a protrusion.
Fig. 22 is a diagram showing a second example in which the through hole shown in Fig. 13 is replaced with protrusions.
Fig. 23 is a diagram showing a modification of a partition wall shown in Fig. 4.

### DESCRIPTION OF THE PREFERRED EMBODIMENTS

An embodiment of the present disclosure will be described in detail with reference to the drawings. In the drawings, the same or corresponding elements have the same reference characters allotted and description thereof will not be repeated. In each figure referred to below, an X axis, a Y axis and a Z axis represent three axes orthogonal to one another. In the following description, a direction indicated by an arrow along each of the X axis, the Y axis and the Z axis is expressed with "+", and a direction opposite thereto is expressed with "-".

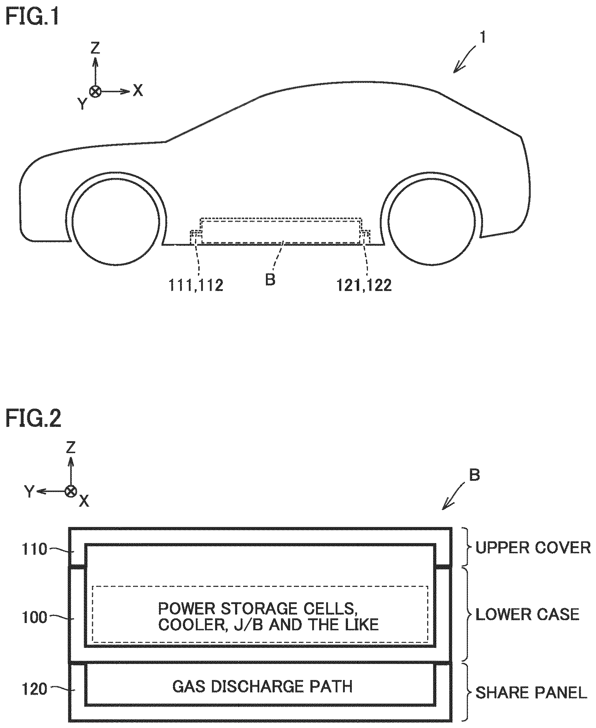

Fig. 1 is a diagram showing a vehicle including a power storage device according to the present embodiment. In Fig. 1, a -X side corresponds to a front side of a vehicle 1 and a +X side corresponds to a rear side of vehicle 1. A -Z side corresponds to a lower side (vertically lower side) and a +Z side corresponds to an upper side (vertically upper side).

Referring to Fig. 1, vehicle 1 includes a power storage device B. Power storage device B may function as a power storage device for driving, which is generally referred to as "battery pack". Vehicle 1 is configured to be capable of traveling using electric power outputted from power storage device B. Vehicle 1 may include a motor that rotates a driving wheel of vehicle 1 using electric power supplied from power storage device B. Vehicle 1 is, for example, a battery electric vehicle (BEV) that does not include an internal combustion engine. However, the present disclosure is not limited to the above. Vehicle 1 may be a hybrid electric vehicle (HEV) or a plug-in hybrid electric vehicle (PHEV) that includes an internal combustion engine, or may be another electrically powered vehicle (xEV).

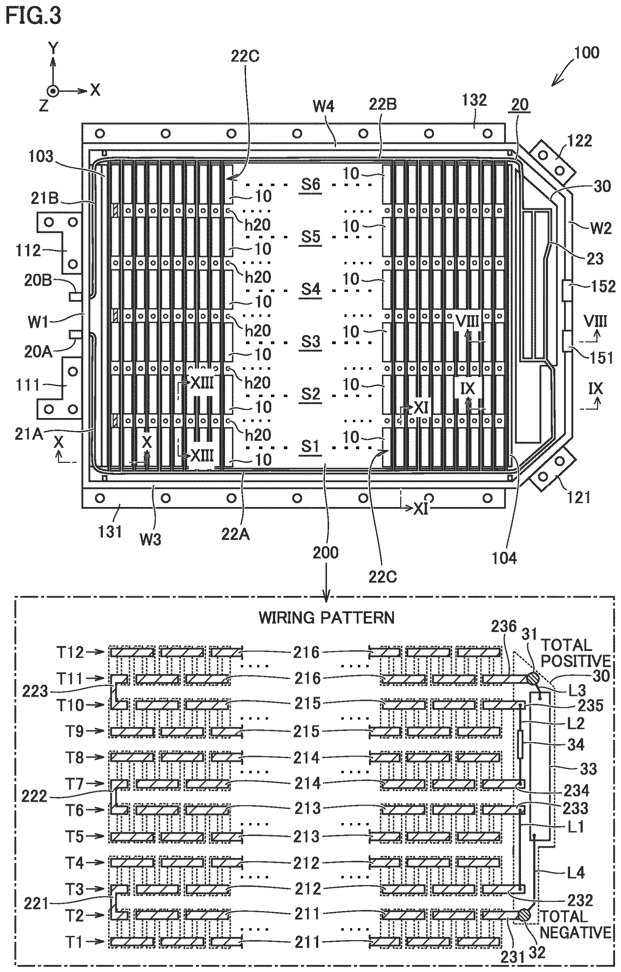

Power storage device B is, for example, placed under the floor of vehicle 1. Power storage device B may be connected to a body of vehicle 1. Power storage device B has brackets 111 and 112 at a -X-side end and brackets 121 and 122 at a +X-side end (see Fig. 3 described below). Although not shown in Fig. 1, power storage device B further has brackets (e.g., brackets 131 and 132 shown in Fig. 3 described below) at both ends in the Y direction. These brackets are fastened to, for example, a floor member of vehicle 1, whereby power storage device B is connected to the body (e.g., a floor panel) of vehicle 1. At least a part of a housing of power storage device B may function as a frame member of vehicle 1. However, the present disclosure is not limited to the above-described configuration. Power storage device B may be placed on the floor of vehicle 1.

Fig. 2 is a diagram showing a schematic configuration of power storage device B. Referring to Fig. 2, power storage device B includes a lower case 100 (first housing member), an upper cover 110 (second housing member) and a share panel 120 (third housing member), and these components function as the housing of power storage device B. Lower case 100 opens upward (+Z side) to accommodate a plurality of power storage cells and various components relating to these power storage cells. As will be described in detail below, lower case 100 accommodates the power storage cells, a cooler, a junction box (hereinafter denoted as "J/B") and the like (see Fig. 3). Each of upper cover 110 and share panel 120 is fixed to lower case 100. Upper cover 110 is disposed above lower case 100 to function as a lid of lower case 100. Share panel 120 is disposed below (-Z side) lower case 100 to suppress an impact on lower case 100 caused by road surface interference. A gas discharge path is formed between lower case 100 and share panel 120. Upper cover 110 and share panel 120 correspond to a +Z-side end and a -Z-side end of power storage device B, respectively.
Basically, the housing of power storage device B seals a space (internal space) in the housing. However, when a valve provided in the housing is opened, the internal space communicates with an external space through the valve.

Fig. 3 is a diagram of the inside of lower case 100, with upper cover 110 removed, when viewed from the +Z side. Referring to Fig. 3, lower case 100 accommodates power storage stacks S1 to S6, a cooling apparatus 20, a battery circuit unit 30, and a wiring board 200. Each of power storage stacks S1 to S6 includes a plurality of power storage cells 10 arranged in the X direction. Details of a configuration of each power storage cell will be described below. Wiring board 200 has a wiring pattern for power storage stacks S1 to S6. Wiring board 200 may function as a terminal block. Cooling apparatus 20 includes ports 20A and 20B, pipes 21A and 21B extending in the Y direction, pipes 22A and 22B extending in the X direction, a plurality of coolers 22C extending in the Y direction, and a cooling pipe 23. These components are connected in the order of port 20A, pipe 21A, pipe 22A, cooling pipe 23, pipe 22B, pipe 21B, and port 20B from the upstream side. Pipe 22A and pipe 22B are connected through the plurality of coolers 22C (cooling plates) arranged in the X direction. Cooler 22C is disposed between the power storage cells adjacent to each other in each of power storage stacks S1 to S6. These power storage cells adjacent to each other are cooled by a coolant flowing through a flow path formed in cooler 22C. Cooler 22C has a flow path communicating with each of pipes 22A and 22B. Cooling pipe 23 is configured to cool battery circuit unit 30. Battery circuit unit 30 may be a single unit, or may include a plurality of units.

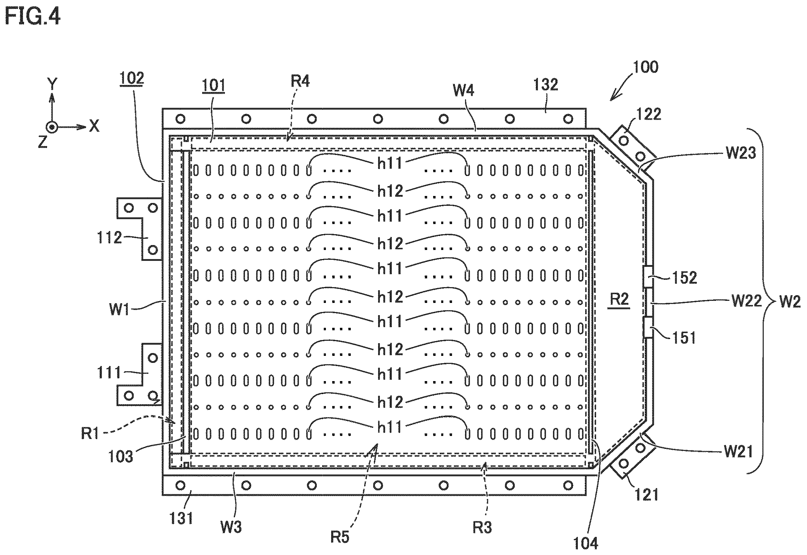

Fig. 4 is a diagram showing lower case 100 in an empty state (a state in which lower case 100 does not accommodate anything).

Referring to Fig. 4, lower case 100 has a bottom wall 101 (bottom portion) and a perimeter wall 102 (peripheral edge portion). Bottom wall 101 includes regions R1 to R5. Perimeter wall 102 includes side walls W1 to W4. Side walls W1, W2, W3, and W4 correspond to a -X-side end, a +X-side end, a -Y-side end, and a +Y-side end of lower case 100, respectively. Side wall W2 includes side walls W21 to W23.

Side walls W21 to W23 are located on the +X side of side walls W3 and W4 extending in the X direction, and among side walls W21 to W23, side wall W22 is located farthest to the +X side. Brackets 121 and 122 (Fig. 1) are provided on side walls W21 and W23, respectively. Gas discharge valves 151 and 152 are provided in side wall W22. Side wall W22 is coupled to side walls W3 and W4 through side walls W21 and W23, respectively. Ends of side walls W3 and W4 on the opposite side (-X side) are coupled to each other through side wall W1 extending in the Y direction. Brackets 131 and 132 are provided on side walls W3 and W4, respectively. Brackets 111 and 112 (Fig. 1) are provided on side wall W1. Each of side walls W1 to W4 rises from a peripheral edge portion of bottom wall 101 to the +Z side. An internal space of lower case 100 is surrounded by side walls W1 to W4.

Partition walls 103 and 104 extending in the Y direction are provided on bottom wall 101. Each of partition walls 103 and 104 may be fastened to bottom wall 101. Partition wall 104 is located on the +X side of partition wall 103. Each of partition walls 103 and 104 rises from bottom wall 101 to the +Z side. Region R5 is a rectangular region disposed in the center of lower case 100 and is partitioned by partition walls 103 and 104. Region R5 is a region where wiring board 200 and power storage stacks S1 to S6 (Fig. 3) are disposed. Region R5 is located between partition walls 103 and 104 (on an inner side of partition wall 103 and an inner side of partition wall 104). Partition walls 103 and 104 may apply restraining force to power storage stacks S1 to S6 from both sides in the X direction. Each of partition walls 103 and 104 may be a cross frame.

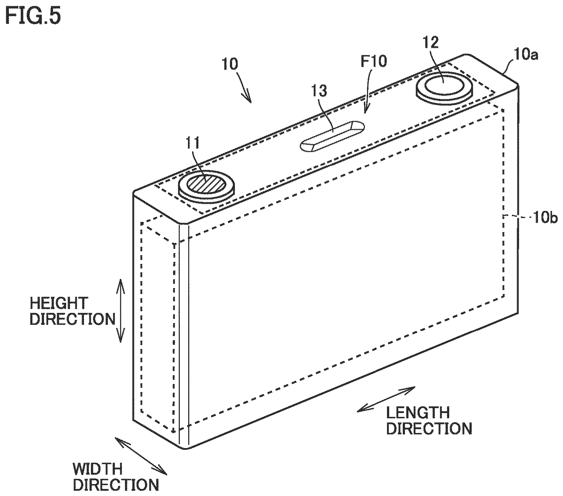

An opening h11 is formed at a position where each power storage cell is disposed in region R5. Each of a plurality of openings h11 is disposed to face a below-described valve 13 (see Fig. 5) of power storage cell 10 in the Z direction. The plurality of openings h11 are arranged in the X direction, thereby forming a row of openings h11. Hereinafter, the row of openings h11 arranged in the X direction will be referred to as "first opening row". Six first opening rows are formed in bottom wall 101. An opening h12 is formed between two openings h11 adjacent to each other in the Y direction. A plurality of openings h12 are arranged in the X direction, thereby forming a row of openings h12. Hereinafter, the row of openings h12 arranged in the X direction will be referred to as "second opening row". Five second opening rows are formed in bottom wall 101. Opening h11 is, for example, a long hole extending through bottom wall 101. Opening h12 is, for example, a round hole extending through bottom wall 101. However, the shape of each of openings h11 and h12 can be changed as appropriate. Each of openings h11 and h12 is formed by, for example, punching.

Region R3 and region R4 are provided on the -Y side and on the +Y side of region R5, respectively. Region R1 is provided on an outer side (-X side) of partition wall 103. Region R2 is provided on an outer side (+X side) of partition wall 104. Region R2 is a region where battery circuit unit 30 (Fig. 3) is disposed. Region R2 is located at the +X-side end of lower case 100 and is partitioned by partition wall 104 and side wall W2.

In the present embodiment, each of bottom wall 101, perimeter wall 102 and partition walls 103 and 104 is made of metal. However, the material can be changed as appropriate. Bottom wall 101, perimeter wall 102 and partition walls 103 and 104 may be made of the same material, or may be made of different materials. Bottom wall 101, perimeter wall 102 and partition walls 103 and 104 may be separately formed and joined, or may be integrally formed in a seamless manner.

Referring to Figs. 3 and 4, ports 20A and 20B are provided in side wall W1. Ports 20A and 20B are located in substantially the center of side wall W1 in the Y direction. Port 20B is located on the +Y side of port 20A. Pipes 21A and 21B are disposed in region R1. Pipe 22A and pipe 22B are disposed in region R3 and region R4, respectively. Each of pipes 21A, 21B, 22A, and 22B is disposed to cool a peripheral edge portion (regions R1, R3 and R4) of power storage device B. Cooling pipe 23 is disposed in region R2. The plurality of coolers 22C are disposed in region R5.

A coolant supplied from port 20A to pipe 21A flows in pipe 21A to the -Y side. The coolant flowing from pipe 21A into pipe 22A flows in pipe 22A to the +X side toward cooling pipe 23 and also flows to the flow paths of the plurality of coolers 22C. The coolant flowing from pipe 22A into coolers 22C flows to the +Y side toward pipe 22B, while cooling power storage stacks S1 to S6. The coolant flowing from pipe 22A into cooling pipe 23 flows to the +Y side toward pipe 22B, while cooling battery circuit unit 30. The coolant flowing from coolers 22C or cooling pipe 23 into pipe 22B flows in pipe 22B to the -X side toward pipe 21B. Thereafter, the coolant flows in pipe 21B to the -Y side and flows out from port 20B.

As described above, cooling apparatus 20 is configured to be capable of cooling power storage device B having a high temperature. However, when power storage device B has a low temperature due to weather conditions, a place (e.g., a cold climate area) or the like, the coolant may raise the temperature of power storage device B. The coolant may be circulated by a pump (not shown) connected to ports 20A and 20B. Vehicle 1 (Fig. 1) may include an apparatus that adjusts a temperature of the coolant (such as a heat exchanger, a chiller or a heater). The coolant may be a liquid (e.g., water, oil or an antifreeze solution), or may be a gas (e.g., carbon dioxide gas).

In the present embodiment, wiring board 200 is disposed on the +Z side of bottom wall 101, and further, power storage stacks S1 to S6 are disposed on the +Z side of wiring board 200.

Fig. 5 is a diagram showing an exemplary configuration of the power storage cell constituting each of power storage stacks S1 to S6. Referring to Fig. 5, power storage cell 10 includes a case 10a and an electrode assembly 10b accommodated in case 10a. Case 10a is a prismatic case having a rectangular parallelepiped shape. Electrode assembly 10b may include one or more wound bodies (e.g., two wound bodies). For example, each of the wound bodies has such a structure that a positive electrode sheet and a negative electrode sheet are wound with a separator interposed therebetween. Each of the positive electrode sheet and the negative electrode sheet includes an electrode foil and an active material layer. Power storage cell 10 is, for example, a secondary battery such as a lithium ion battery, a nickel-metal hydride battery or a sodium ion battery. In the present embodiment, a liquid lithium ion battery is used as power storage cell 10. In addition to electrode assembly 10b, an electrolyte solution is accommodated in case 10a. The electrolyte solution includes, for example, an organic solvent and a lithium salt. Examples of the lithium ion battery include an LFP battery including lithium iron phosphate as a positive electrode active material, and a ternary battery including NMC (nickel manganese cobalt) as a positive electrode active material. A type of the secondary battery is not limited to the above and may, for example, be an all-solid-state secondary battery. Instead of the wound body, a stacked body (e.g., a stacked body in which a positive electrode sheet and a negative electrode sheet are stacked with a separator interposed therebetween) may be used.

Electrode terminals 11 and 12 and valve 13 are provided on a surface F10 of case 10a. Surface F10 corresponds to one end face of power storage cell 10 in a height direction. Valve 13 functions as an explosion-proof valve. Case 10a is basically maintained in a sealed state. However, when a pressure in case 10a exceeds a first reference value, valve 13 is opened to reduce the pressure in case 10a. Electrode terminal 11 and electrode terminal 12 are electrically connected to the positive electrode sheet and the negative electrode sheet of electrode assembly 10b to function as a positive electrode terminal and a negative electrode terminal, respectively. A portion of case 10a around electrode terminals 11 and 12 (e.g., a portion indicated by a broken line in Fig. 5) may be made of an insulating material and the other portion may be made of metal. However, the present disclosure is not limited to the above. Case 10a may be made of any material.

In the present embodiment, each of power storage stacks S1 to S6 shown in Fig. 3 is constituted by a plurality of power storage cells 10 arranged in the X direction. The power storage cells included in power storage stacks S1 to S6 have the same configuration (see Fig. 5). By forming power storage stacks S1 to S6 using common power storage cells 10, power storage device B can be manufactured more easily, which leads to a reduction in manufacturing cost. However, the present disclosure is not limited to the above. Each of the power storage stacks may include a plurality of types of power storage cells. The number of the power storage stacks can be changed as appropriate. The number of the power storage stacks may be one, or may be plural.

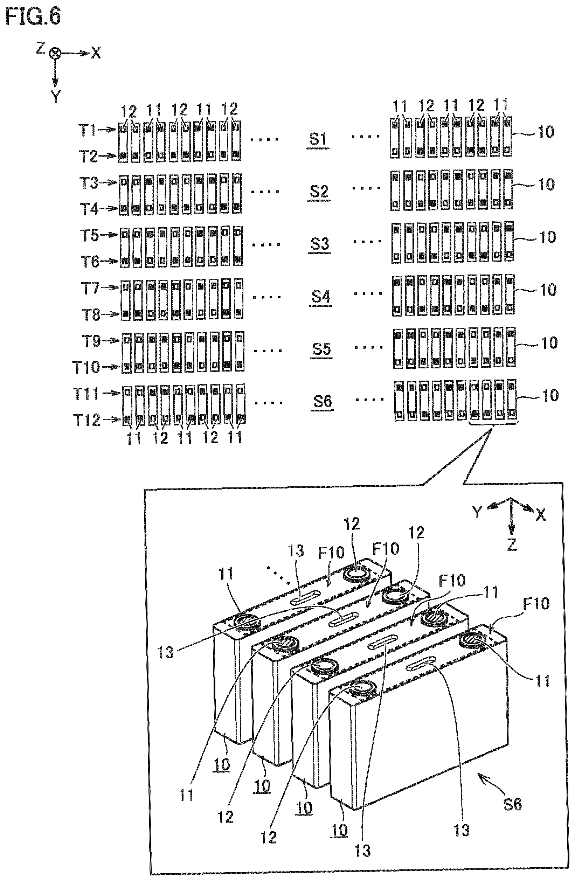

Fig. 6 is a diagram of power storage stacks S1 to S6 disposed in lower case 100, when viewed from the -Z side. Referring to Fig. 6, each of power storage stacks S1 to S6 includes N power storage cells 10. N is, for example, equal to or more than 20 and equal to or less than 50. However, the present disclosure is not limited to the above. N may be equal to or more than 2 and less than 20, or may be more than 50. N (the number of the power storage cells included in one power storage stack) can be arbitrarily set.

In each of the power storage stacks, power storage cell 10 is disposed in lower case 100 such that the height direction coincides with the Z direction, a width direction coincides with the X direction, and a length direction coincides with the Y direction. However, N power storage cells 10 are disposed such that a positional relationship between electrode terminal 11 (positive electrode terminal) and electrode terminal 12 (negative electrode terminal) is reversed for every two power storage cells 10. In each of the power storage stacks, two power storage cells 10 each including electrode terminal 11 facing the +Y side and two power storage cells 10 each including electrode terminal 11 facing the -Y side are alternately disposed in the X direction.

Power storage stack S1 has terminal rows T1 and T2 in the X direction. Power storage stack S2 has terminal rows T3 and T4 in the X direction. Power storage stack S3 has terminal rows T5 and T6 in the X direction. Power storage stack S4 has terminal rows T7 and T8 in the X direction. Power storage stack S5 has terminal rows T9 and T10 in the X direction. Power storage stack S6 has terminal rows T11 and T12 in the X direction. In each of the terminal rows, two electrode terminals 11 (positive electrode terminals) and two electrode terminals 12 (negative electrode terminals) are alternately disposed in the X direction. From the -Y side toward the +Y side, terminal rows T1, T2, T3, T4, T5, T6, T7, T8, T9, T10, T11, and T12 are disposed in this order.

Power storage stacks S1 to S6 include the same number of power storage cells and are disposed such that the positions of the power storage cells are aligned. A column (a column in the Y direction) is thus formed by six power storage cells 10 arranged in the Y direction. These columns are arranged in the X direction. "6×N" power storage cells 10 are disposed in a matrix having six columns in the Y direction and N rows in the X direction. Hereinafter, first power storage cell 10, second power storage cell 10, ..., N-th power storage cell 10 from the -X-side end in power storage stack S1 will be denoted as "cell 1(1)", "cell 1(2)", ..., "cell 1(N)", respectively. First power storage cell 10, second power storage cell 10, ..., N-th power storage cell 10 from the -X-side end in power storage stack S2 will be denoted as "cell 2(1)", "cell 2(2)", ..., "cell 2(N)", respectively. First power storage cell 10, second power storage cell 10, ..., N-th power storage cell 10 from the -X-side end in power storage stack S3 will be denoted as "cell 3(1)", "cell 3(2)", ..., "cell 3(N)", respectively. First power storage cell 10, second power storage cell 10, ..., N-th power storage cell 10 from the -X-side end in power storage stack S4 will be denoted as "cell 4(1)", "cell 4(2)", ..., "cell 4(N)", respectively. First power storage cell 10, second power storage cell 10, ..., N-th power storage cell 10 from the -X-side end in power storage stack S5 will be denoted as "cell 5(1)", "cell 5(2)", ..., "cell 5(N)", respectively. First power storage cell 10, second power storage cell 10, ..., N-th power storage cell 10 from the -X-side end in power storage stack S6 will be denoted as "cell 6(1)", "cell 6(2)", ..., "cell 6(N)", respectively.

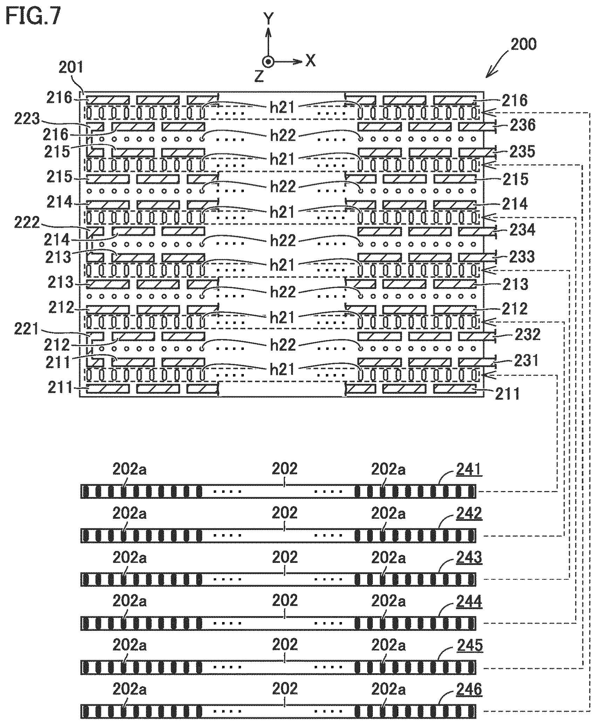

The power storage cells included in power storage stacks S1 to S6 shown in Fig. 6 are electrically connected to each other by a wiring pattern of wiring board 200. Wiring board 200 has, for example, a wiring pattern shown in Fig. 7. Fig. 7 is a diagram showing an exemplary configuration of wiring board 200.

Referring to Fig. 7, wiring board 200 is, for example, a panel having a wiring pattern formed thereon. Specifically, wiring board 200 includes an insulating substrate 201 having a rectangular shape, a plurality of conductor members 211, a plurality of conductor members 212, a plurality of conductor members 213, a plurality of conductor members 214, a plurality of conductor members 215, a plurality of conductor members 216, conductor members 221 to 223, and conductor members 231 to 236. Insulating substrate 201 is a substrate having insulation properties. Insulating substrate 201 may include a resin (e.g., a thermosetting resin). Insulating substrate 201 corresponds to an example of "substrate" according to the present disclosure.

Each of the plurality of conductor members 211 is connected to terminal row T1 or T2 shown in Fig. 6 to electrically connect the power storage cells included in power storage stack S1 to each other. Each of the plurality of conductor members 212 is connected to terminal row T3 or T4 shown in Fig. 6 to electrically connect the power storage cells included in power storage stack S2 to each other. Each of the plurality of conductor members 213 is connected to terminal row T5 or T6 shown in Fig. 6 to electrically connect the power storage cells included in power storage stack S3 to each other. Each of the plurality of conductor members 214 is connected to terminal row T7 or T8 shown in Fig. 6 to electrically connect the power storage cells included in power storage stack S4 to each other. Each of the plurality of conductor members 215 is connected to terminal row T9 or T10 shown in Fig. 6 to electrically connect the power storage cells included in power storage stack S5 to each other. Each of the plurality of conductor members 216 is connected to terminal row T11 or T12 shown in Fig. 6 to electrically connect the power storage cells included in power storage stack S6 to each other.

Conductor member 221 electrically connects power storage stacks S1 and S2 to each other. Conductor member 222 electrically connects power storage stacks S3 and S4 to each other. Conductor member 223 electrically connects power storage stacks S5 and S6 to each other. Conductor members 231, 232, 233, 234, 235, and 236 electrically connect power storage stacks S1, S2, S3, S4, S5, and S6 and battery circuit unit 30 to each other, respectively (see Fig. 3).

Each of conductor members 211 to 216, 221 to 223 and 231 to 236 is, for example, a plate-like member made of metal. Each of conductor members 221 to 223 may be a U-shaped plate-like member. Each of the conductor members may be a bus bar. Each of the conductor members may be made of any material and may have any shape.

In the example shown in Fig. 7, each of conductor members 211 to 216 connects the power storage cells in a corresponding power storage stack in parallel, two by two, to obtain parallel-connected bodies, and connects the obtained parallel-connected bodies in series. Each of the parallel-connected bodies consists of a plurality of power storage cells connected in parallel. Conductor member 221 electrically connects electrode terminal 11 of each of cell 1(1) and cell 1(2) and electrode terminal 12 of each of cell 2(1) and cell 2(2) to each other. Conductor member 222 electrically connects electrode terminal 11 of each of cell 3(1) and cell 3(2) and electrode terminal 12 of each of cell 4(1) and cell 4(2) to each other. Conductor member 223 electrically connects electrode terminal 11 of each of cell 5(1) and cell 5(2) and electrode terminal 12 of each of cell 6(1) and cell 6(2) to each other. One end of conductor member 231 is connected to electrode terminal 12 of each of cell 1(N-1) and cell 1(N), and the other end of conductor member 231 is connected to battery circuit unit 30. One end of conductor member 232 is connected to electrode terminal 11 of each of cell 2(N-1) and cell 2(N), and the other end of conductor member 232 is connected to battery circuit unit 30. One end of conductor member 233 is connected to electrode terminal 12 of each of cell 3(N-1) and cell 3(N), and the other end of conductor member 233 is connected to battery circuit unit 30. One end of conductor member 234 is connected to electrode terminal 11 of each of cell 4(N-1) and cell 4(N), and the other end of conductor member 234 is connected to battery circuit unit 30. One end of conductor member 235 is connected to electrode terminal 12 of each of cell 5(N-1) and cell 5(N), and the other end of conductor member 235 is connected to battery circuit unit 30. One end of conductor member 236 is connected to electrode terminal 11 of each of cell 6(N-1) and cell 6(N), and the other end of conductor member 236 is connected to battery circuit unit 30. Furthermore, battery circuit unit 30 shown in Fig. 3 electrically connects cell 2(N) and cell 3(N) to each other and electrically connects cell 4(N) and cell 5(N) to each other. Power storage stacks S1 to S6 are thus electrically connected to each other. In the pattern shown in Fig. 7, the plurality of parallel-connected bodies are connected in series.

The manner of connection of the plurality of power storage cells is not limited to the manner shown in Figs. 6 and 7 and can be changed as appropriate. For example, the number of the power storage cells connected in parallel may be three or more, instead of two. All of the power storage cells may be connected in series without forming the parallel-connected bodies.

In the present embodiment, the wiring pattern of wiring board 200 is formed by conductor members 211 to 216. Conductor members 211 to 216 are fixed to recesses formed in a surface (+Z-side surface) of insulating substrate 201. A part of conductor members 211 to 216 are embedded in insulating substrate 201. However, it is not essential to form the recesses (level difference) for conductor members 211 to 216 in the surface of insulating substrate 201. Conductor members 211 to 216 may be joined to a flat surface of insulating substrate 201.

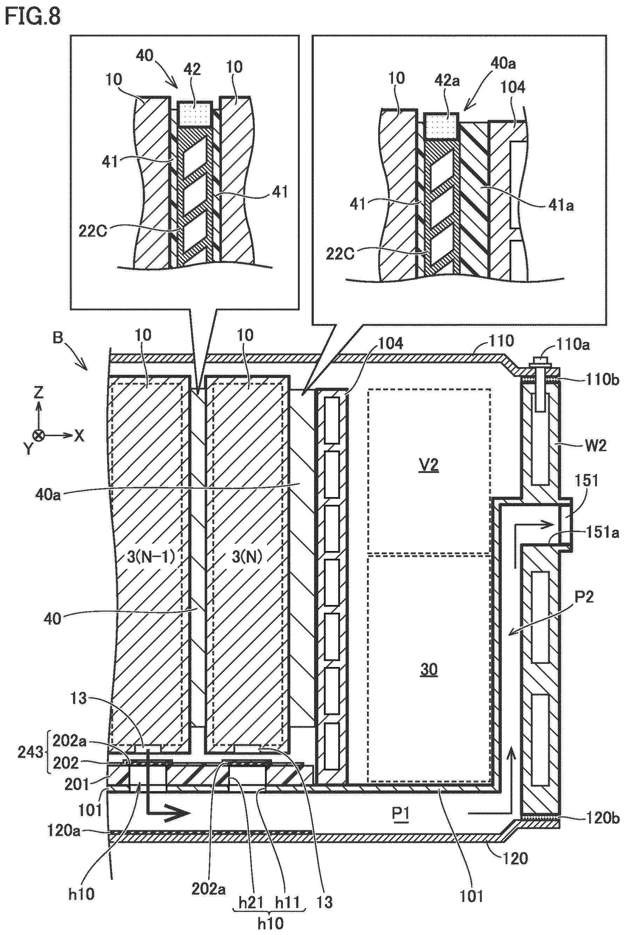

As shown in Fig. 7, a plurality of openings h21 (more specifically, "6×N" openings h21) are formed in insulating substrate 201. Each of openings h21 is located between the electrode terminals of each of the power storage cells included in power storage stacks S1 to S6, and more specifically below (-Z side) valve 13. Any of openings h21 faces valve 13 of power storage cell 10 in the Z direction. Each of openings h21 is, for example, a long hole extending through insulating substrate 201. In an X-Y plane, a position of each of the plurality of openings h21 coincides with a position of each of the plurality of openings h11 shown in Fig. 4. Therefore, a through hole h10 (see Fig. 8 described below) extending through lower case 100 and insulating substrate 201 is formed by opening h11 and opening h21. Opening h11 and opening h21 may have the same shape and dimension in the X-Y plane.

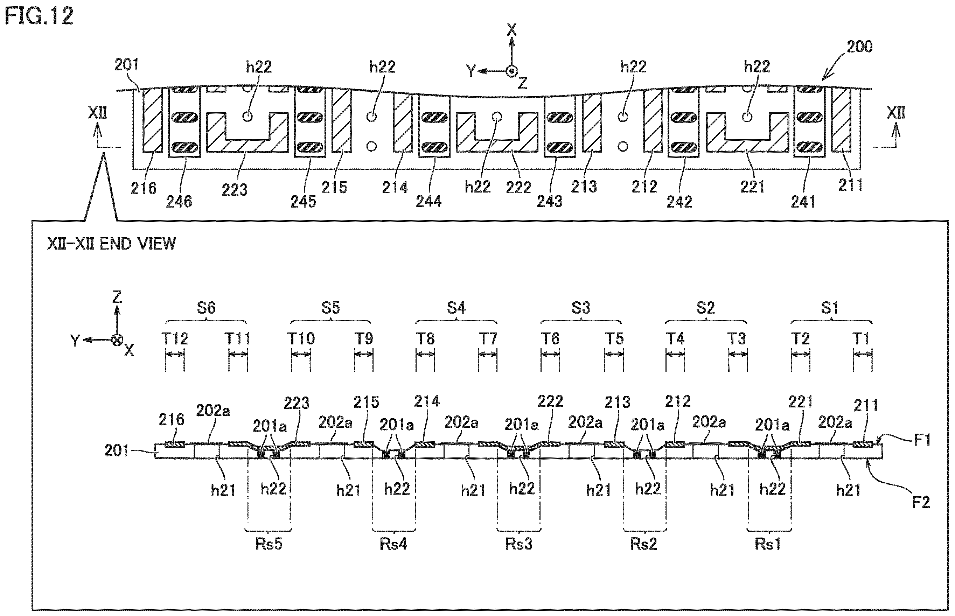

N openings h22 arranged in the X direction are formed in each of a region between power storage stacks S1 and S2 (hereinafter denoted as "Rs1"), a region between power storage stacks S2 and S3 (hereinafter denoted as "Rs2"), a region between power storage stacks S3 and S4 (hereinafter denoted as "Rs3"), a region between power storage stacks S4 and S5 (hereinafter denoted as "Rs4"), and a region between power storage stacks S5 and S6 (hereinafter denoted as "Rs5") (see Fig. 12 described below). Openings h22 are formed in accordance with the positions of power storage cells 10. Any of openings h22 is formed to be sandwiched between two power storage cells 10 adjacent to each other in the Y direction. Each of openings h22 is, for example, a round hole extending through insulating substrate 201. In the X-Y plane, a position of each of the plurality of openings h22 coincides with a position of each of the plurality of openings h12 shown in Fig. 4. A through hole h20 (Fig. 3) extending through lower case 100 and wiring board 200 is formed by opening h12 and opening h22. In the present embodiment, opening h12 and opening h22 have the same shape and dimension in the X-Y plane. However, the present disclosure is not limited to the above. Opening h12 and opening h22 may have different shapes and dimensions in the X-Y plane.

Each of openings h21 and h22 is formed by, for example, punching or etching. As will be described in detail below, hydrophobicity is given to insulating substrate 201 by surface treatment, except for a prescribed portion (see Fig. 12). Openings h22 are located in the portion that does not have hydrophobicity. An edge portion of each of openings h22 has hydrophilicity relative to the other portion.

Cover members 241 to 246 are provided on insulating substrate 201. Thus, all of openings h21 formed in insulating substrate 201 are covered by cover members 241 to 246. Each of cover members 241 to 246 includes a base member 202 elongated in the X direction and N lid portions 202a arranged in the X direction. Base member 202 may have an adhesive on one surface (adhesive surface). Base member 202 may be, for example, an adhesive tape such as a polypropylene (PP) tape. N lid portions 202a are formed on base member 202. In the present embodiment, lid portions 202a include mica. Mica is excellent in heat resistance and electrical insulation properties. N lid portions 202a in each of cover members 241 to 246 are formed to close N openings h21 located below a corresponding one of power storage stacks S1 to S6. Positions of lid portions 202a are determined in accordance with the positions of openings h21. The size of each of lid portions 202a is the same as or larger than that of each of openings h21. For example, N lid portions 202a may be formed on base member 202 by attaching N mica foils to the adhesive surface of base member 202. Alternatively, N lid portions 202a may be formed on base member 202 by forming N through holes in base member 202 and providing a mica foil in each of the through holes. Cover members 241 to 246 are, for example, attached to the surface (+Z-side surface) of insulating substrate 201 with the adhesive surface of base member 202 interposed therebetween.

For example, after cover members 241 to 246 are attached to insulating substrate 201, power storage stacks S1 to S6 shown in Fig. 6 are rotated by 180° around an X axis as a rotation axis and placed on wiring board 200 with surface F10 of each power storage cell facing vertically downward. Then, power storage stacks S1 to S6 are connected to wiring board 200, and power storage stacks S1 to S6 and wiring board 200 thus connected are placed in lower case 100. Furthermore, battery circuit unit 30 is connected to wiring board 200 and cooling apparatus 20 is placed in lower case 100. As a result, the inside of lower case 100 has a state shown in Fig. 3. Cooler 22C, of cooling apparatus 20, may be placed in lower case 100 together with power storage stacks S1 to S6. Thereafter, the remaining portion of cooling apparatus 20 may be put into lower case 100 and each of pipes 22A and 22B may be connected to cooler 22C. Each of wiring board 200 and battery circuit unit 30 may be fixed to lower case 100 with an adhesive (e.g., a silicone adhesive).

Wiring board 200 is electrically connected to battery circuit unit 30 as shown in, for example, the lower part in Fig. 3. Battery circuit unit 30 includes a total positive terminal 31, a total negative terminal 32, a J/B 33, a fuse 34, and electric wires L1 to L4. Total positive terminal 31 is located at a positive-electrode-side end of the whole of power storage stacks S1 to S6 (all of the power storage cells). Total negative terminal 32 is located at a negative-electrode-side end of the whole of power storage stacks S1 to S6 (all of the power storage cells). Electric wire L1 electrically connects conductor member 232 and conductor member 233 to each other. Electric wire L2 electrically connects conductor member 234 and conductor member 235 to each other. Electric wire L2 is provided with fuse 34. Conductor member 236 is connected to total positive terminal 31. Electric wire L3 electrically connects total positive terminal 31 and J/B 33 to each other. Conductor member 231 is connected to total negative terminal 32. Electric wire L4 electrically connects total negative terminal 32 and J/B 33 to each other. J/B 33 accommodates various electric devices. J/B 33 may include at least one of a relay, a fuse, a resistance element, a current sensor, and a connector (e.g., a connector to a vehicle-mounted charger). Battery circuit unit 30 may further include at least one of a battery management system (BMS) and an electronic control unit (ECU). Various sensors (e.g., a temperature sensor and a voltage sensor) and a signal line that transmits values detected by the sensors to at least one of the BMS and the ECU may be further accommodated in region R5 (Fig. 4) of lower case 100. The voltage sensor may be provided for each parallel-connected body or for each power storage cell. The signal line may be formed by a flexible printed circuit (FPC).

The electrode terminals of power storage cells 10 and the conductor members of wiring board 200 may be joined by caulking, thermal compression bonding, or welding (e.g., laser welding). The electrode terminals and the conductor members may be fastened to each other. A recess (counterbore) that accommodates a bolt head and/or a washer may be formed in a rear surface (-Z-side surface) of insulating substrate 201.

Figs. 8, 9, 10, and 11 are end views of power storage device B taken along line VIII-VIII, line IX-IX, line X-X, and line XI-XI in Fig. 3, respectively.

Referring to Figs. 8 to 11, upper cover 110 is, for example, joined to an upper surface (+Z-side surface) of each of side walls W1 to W4 with an adhesive 110b interposed therebetween, and is further fastened thereto by a bolt 110a. Share panel 120 is, for example, joined to a lower surface (-Z-side surface) of each of side walls W1 to W4 with an adhesive 120b interposed therebetween. A gas discharge path P1 is formed between bottom wall 101 of lower case 100 and share panel 120. Each of side walls W1 to W4 is formed to be hollow. Gas discharge paths P2 and P3 are formed inside side walls W2 and W3, respectively. Although not shown, a gas discharge path is also formed inside side wall W4 in a manner equivalent to gas discharge path P3 of side wall W3. These gas discharge paths communicate with each other. Each of adhesives 110b and 120b may be an adhesive (e.g., a silicone adhesive) higher in thermal conductivity than air.

As shown in Fig. 8, a gas discharge hole 151a connecting to gas discharge valve 151 (Fig. 3) is formed in side wall W2. Gas discharge hole 151a extends through side wall W2. Although not shown, a gas discharge hole connecting to gas discharge valve 152 (Fig. 3) is also formed in side wall W2. These gas discharge holes communicate with gas discharge path P2.

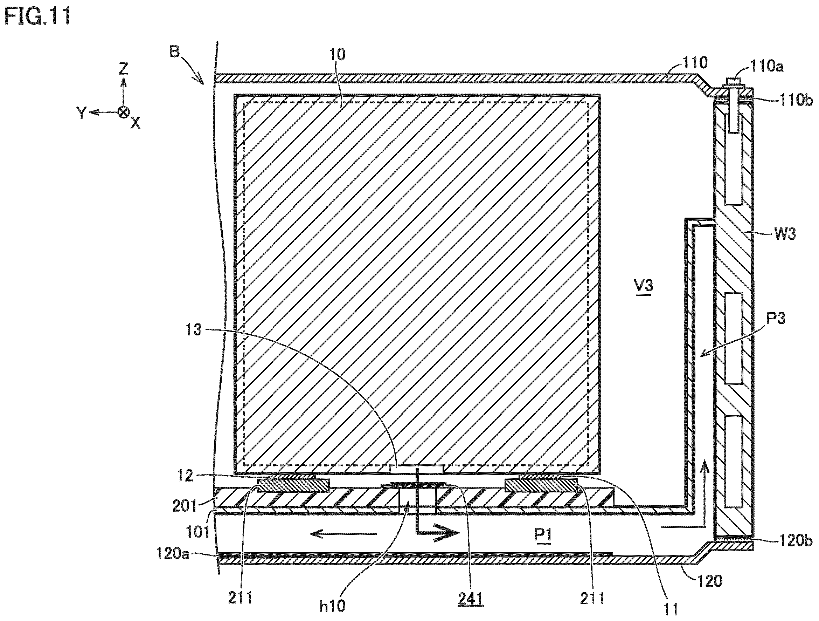

As shown in Figs. 8 and 11, when the pressure in power storage cell 10 exceeds the first reference value, valve 13 is opened. Then, due to a pressure and heat of the gas discharged from inside power storage cell 10 through valve 13, a hole is made in lid portion 202a that faces valve 13. The gas discharged from power storage cell 10 flows into gas discharge path P1 through this hole. Each of gas discharge valves 151 and 152 shown in Fig. 3 is opened when a pressure in gas discharge path P2 exceeds a second reference value. The second reference value may be a pressure value lower than the first reference value. A check valve is, for example, used as each of gas discharge valves 151 and 152. When at least one of gas discharge valves 151 and 152 is opened, the gas in each of the gas discharge paths flows toward the opened gas discharge valve and is discharged outside power storage device B through this gas discharge valve. A thickness of lid portion 202a provided in wiring board 200 (Fig. 7) is set to a thickness that allows a hole to be made when valve 13 that lid portion 202a faces is opened (e.g., when valve 13 is opened with ignition).

A mica layer 120a (e.g., a mica foil) is provided on an inner (+Z side) surface of share panel 120. Mica layer 120a may be provided to overlap all of lid portions 202a in the X-Y plane. Mica layer 120a may be provided in entire region R5 shown in Fig. 4. Mica layer 120a protects share panel 120 from a substance (such as a gas, an electrolyte solution or debris) discharged from power storage cells 10 through lid portions 202a.

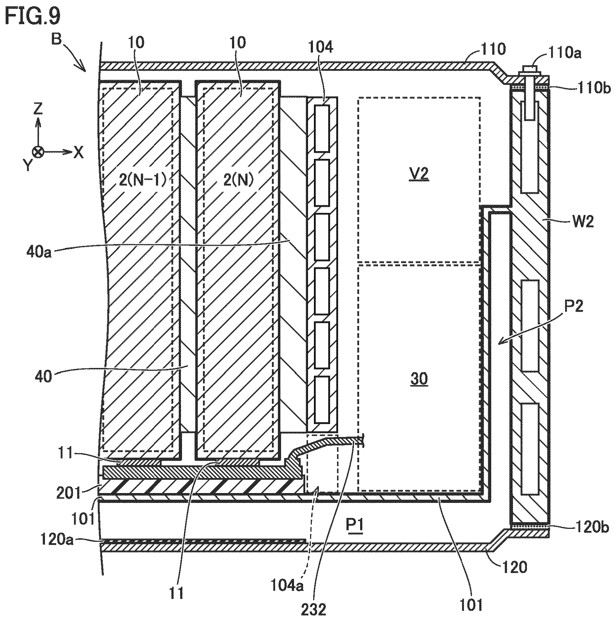

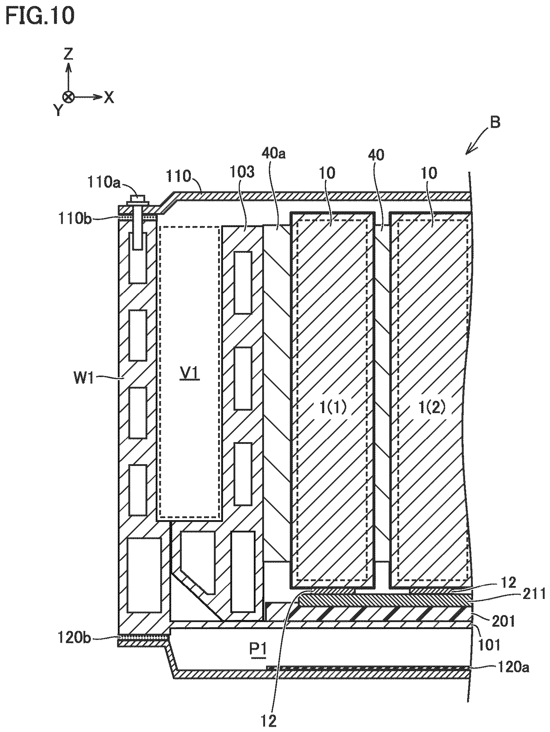

As shown in Fig. 10, there is a space V1 between partition wall 103 and side wall W1 in lower case 100. Although not shown, pipe 21A shown in Fig. 3 is disposed in space V1. As shown in Figs. 8 and 9, there is a space V2 above battery circuit unit 30 in lower case 100. Although not shown, cooling pipe 23 shown in Fig. 3 is disposed in space V2. As shown in Fig. 11, there is a space V3 between power storage cell 10 located at the -Y-side end and side wall W3 in lower case 100. Although not shown, pipe 22A shown in Fig. 3 is disposed in space V3. Spaces V1, V2 and V3 are located in regions R1, R2 and R3 (Fig. 4) in the X-Y plane, respectively.

In each of the power storage stacks, an intermediate member 40 is provided between two power storage cells 10 adjacent to each other in the X direction, and a termination member 40a is provided on an outer side of power storage cell 10 located at the end in the X direction.

As shown in Fig. 8, intermediate member 40 is, for example, located between cell 3(N-1) and cell 3(N). Intermediate member 40 includes cooler 22C (Fig. 3), two insulating pads 41 and two impact absorbing members 42 (only one is shown). Each of two insulating pads 41 may be a resin film. In intermediate member 40 shown in Fig. 8, one insulating pad 41 is located between cooler 22C and cell 3(N-1), and the other insulating pad 41 is located between cooler 22C and cell 3(N). Impact absorbing members 42 are located at both ends of intermediate member 40 in the Z direction to suppress transmission of an impact to cooler 22C. Although Fig. 8 only shows the +Z-side end of intermediate member 40, the -Z-side end also has the same structure.

As shown in Fig. 8, termination member 40a is, for example, located on an outer side (+X side) of cell 3(N). Termination member 40a includes cooler 22C (Fig. 3), insulating pad 41, an insulating pad 41a, and two impact absorbing members 42a (only one is shown). Termination member 40a basically has the same structure as that of intermediate member 40. However, in termination member 40a, one of two insulating pads 41 of intermediate member 40 is replaced with insulating pad 41a formed to be thicker than insulating pad 41. This makes an impact less likely to be transmitted from the outside to the power storage portion (power storage stacks S1 to S6). Impact absorbing members 42a are located at both ends of termination member 40a in the Z direction to suppress transmission of an impact to cooler 22C. Although Fig. 8 only shows the +Z-side end of termination member 40a, the -Z-side end also has the same structure.

As shown in Fig. 9, an opening 104a through which conductor member 232 extends is formed in partition wall 104. Conductor member 232 extends through opening 104a and is connected to battery circuit unit 30. Although not shown, openings through which conductor members 231, 233, 234, 235, and 236 shown in Fig. 3 extend are also formed in partition wall 104.

Fig. 12 is a diagram for illustrating a cross-sectional structure of wiring board 200. An end view taken along line XII-XII in a plan view of wiring board 200 shown in the upper part in Fig. 12 is shown in the lower part in Fig. 12.

Referring to Fig. 12, insulating substrate 201 has a surface F1 (vertically upper surface) facing the +Z side and a surface F2 (vertically lower surface) facing the -Z side. The whole of surface F2 is formed to be flat. No conductor members are provided on surface F2. In contrast, a plurality of conductor members (including conductor members 211 to 216 and 221 to 223) are formed on surface F1. In addition, a plurality of recesses are formed in surface F1. In surface F1, each of the recesses is formed between the power storage stacks adjacent to each other in the Y direction. Specifically, the recess (i.e., groove) extending in the X direction is formed in each of Rs1 to Rs5 in Fig. 12. Opening h22 is formed in each of the recesses.

The recess in Rs1 has a sloped surface sloped downward from terminal row T2 toward opening h22 and a sloped surface sloped downward from terminal row T3 toward opening h22. The recess in Rs2 has a sloped surface sloped downward from terminal row T4 toward opening h22 and a sloped surface sloped downward from terminal row T5 toward opening h22. The recess in Rs3 has a sloped surface sloped downward from terminal row T6 toward opening h22 and a sloped surface sloped downward from terminal row T7 toward opening h22. The recess in Rs4 has a sloped surface sloped downward from terminal row T8 toward opening h22 and a sloped surface sloped downward from terminal row T9 toward opening h22. The recess in Rs5 has a sloped surface sloped downward from terminal row T10 toward opening h22 and a sloped surface sloped downward from terminal row T11 toward opening h22. By forming such sloped surfaces, water on surface F1 is guided to openings h22 by gravity and is likely to fall into gas discharge path P1 (Figs. 8 to 11) through openings h22.

Insulating substrate 201 has a hydrophilic portion 201a (first portion) located at an edge portion of each of the plurality of openings h22 and a hydrophobic portion (second portion) higher in degree of hydrophobicity than hydrophilic portion 201a. In the present embodiment, a portion of insulating substrate 201 other than hydrophilic portion 201a is the hydrophobic portion. The degree of hydrophobicity can be expressed by, for example, a contact angle. As the contact angle becomes larger, the degree of hydrophobicity becomes higher. Hydrophilic portion 201a and the hydrophobic portion of insulating substrate 201 may be formed by selectively applying water repellent treatment to the portion corresponding to the hydrophobic portion (portion other than the edge portion of opening h22). The water repellent treatment may be treatment of coating surface F1 of insulating substrate 201 with silicone or fluorine. By providing hydrophilic portions 201a at the edge portions of openings h22, water on surface F1 is guided to the edge portions of openings h22 and is likely to fall into gas discharge path P1 (Figs. 8 to 11) through openings h22.

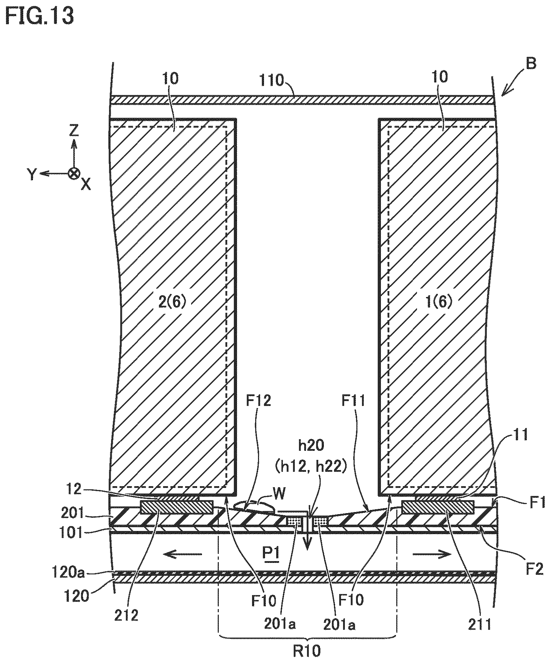

Fig. 13 is an end view of power storage device B taken along line XIII-XIII in Fig. 3.

Referring to Fig. 13 together with Figs. 3 to 12, power storage device B includes two power storage cells 10 (e.g., cell 1(6) and cell 2(6)) adjacent to each other in the Y direction, and wiring board 200. Wiring board 200 has insulating substrate 201, and conductor member 211 (first conductor member) and conductor member 212 (second conductor member) provided on surface F1 of insulating substrate 201. Cell 1(6) has, on surface F10 (vertically lower surface), electrode terminal 11 (first electrode terminal) connected to conductor member 211, and an explosion-proof valve (valve 13 shown in Fig. 5). Cell 2(6) has, on surface F10 (vertically lower surface), electrode terminal 12 (second electrode terminal) connected to conductor member 212, and an explosion-proof valve (valve 13 shown in Fig. 5). In insulating substrate 201, a recess R10 and opening h22 are provided between electrode terminal 11 of cell 1(6) and electrode terminal 12 of cell 2(6). Specifically, recess R10 is formed between electrode terminal 11 of cell 1(6) and electrode terminal 12 of cell 2(6). Opening h22 is formed in recess R10. Opening h22 may be located midway between electrode terminal 11 of cell 1(6) and electrode terminal 12 of cell 2(6). Opening h12 is formed in bottom wall 101 of lower case 100 (see Fig. 4). Opening h12 is located below (on the -Z side of) opening h22. Opening h22 communicates with gas discharge path P1 through opening h12. Openings h12 and h22 are continuous in the Z direction to form through hole h20.

Insulating substrate 201 has a first inclined portion F11 inclined downward from electrode terminal 11 of cell 1(6) toward opening h22 and a second inclined portion F12 inclined downward from electrode terminal 12 of cell 2(6) toward opening h22. Insulating substrate 201 is located on the vertically lower side (-Z side) of surface F10 (including valve 13) of each of cell 1(6) and cell 2(6). Gas discharge path P1 is located on the vertically lower side (-Z side) of insulating substrate 201.

Even when water (e.g., a water droplet W shown in Fig. 13) is generated in at least one power storage cell of cell 1(6) and cell 2(6) that are adjacent to each other, the water falls into gas discharge path P1 through through hole h20. Therefore, even when water is generated in one power storage cell of cell 1(6) and cell 2(6) that are adjacent to each other, spreading of the water to the other power storage cell is suppressed. In addition, the gas discharged from each of cell 1(6) and cell 2(6) flows through gas discharge path P1 (see Fig. 8). Therefore, the water in gas discharge path P1 is discharged outside through gas discharge valves 151 and 152 together with the gas.

Hereinafter, a pair of power storage cells 10 (the first power storage cell and the second power storage cell) adjacent to each other in the Y direction will be referred to as "Y-cell pair". In the present embodiment, as shown in Fig. 3, power storage device B has "5×N" Y-cell pairs. In each of power storage stacks S2 to S5, one power storage cell 10 constitutes two Y-cell pairs. For example, cell 2(1) constitutes a Y-cell pair together with cell 1(1), and also constitutes a Y-cell pair together with cell 3(1). Of the "5×N" Y-cell pairs, the Y-cell pairs other than the three Y-cell pairs connected by conductor members 221, 222 and 223 have the structure shown in Fig. 13.

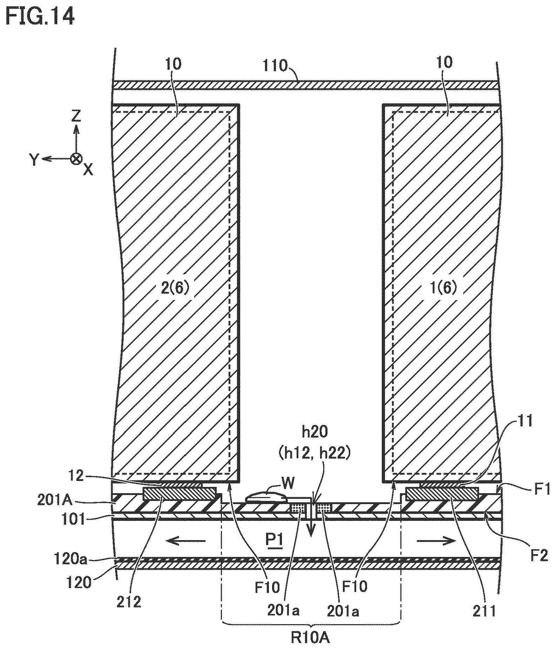

The shape of the recess located between two power storage cells 10 adjacent to each other in the substrate is not limited to the shape shown in Fig. 13 and can be changed as appropriate. Fig. 14 is a diagram showing a modification of recess R10 shown in Fig. 13. An insulating substrate 201A shown in Fig. 14 has a recess R10A, instead of recess R10 (Fig. 13) having an inclined side wall. Recess R10A has a bottom surface and a side wall forming a right angle with the bottom surface. Recess R10A is located between the electrode terminals of the Y-cell pair, e.g., between electrode terminal 11 of cell 1(6) and electrode terminal 12 of cell 2(6). Recess R10 or R10A may be formed from one end to the other end of insulating substrate 201 in the X direction. However, the present disclosure is not limited to the above. The side wall of the recess may be formed to surround one or more openings h22 (e.g., on four sides).

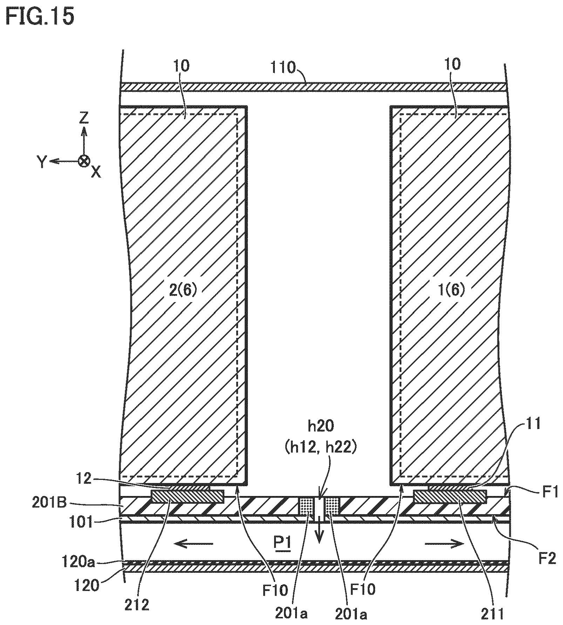

It is not essential to form the recess between two power storage cells 10 adjacent to each other in the substrate. Fig. 15 is a diagram showing an example in which there is no recess between two power storage cells 10 adjacent to each other in the substrate. Front and rear surfaces (surfaces F1 and F2) of an insulating substrate 201B shown in Fig. 15 are formed to be flat. Opening h22 extending through insulating substrate 201B between the electrode terminals of the Y-cell pair forms through hole h20, together with opening h12 located below opening h22 and extending through bottom wall 101 of lower case 100.

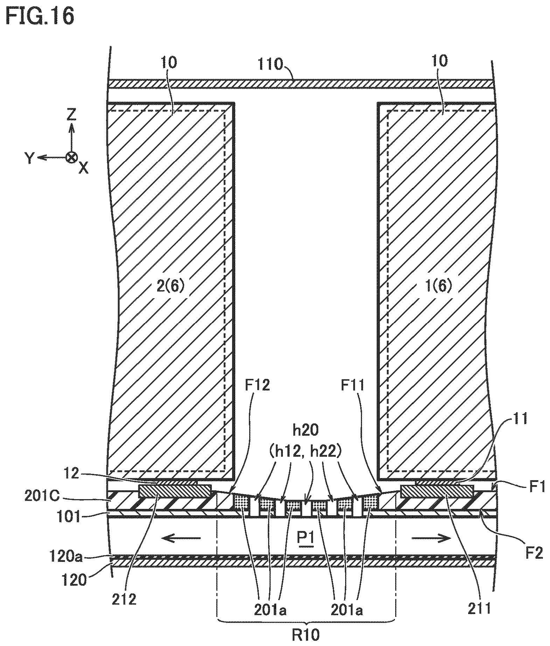

A plurality of through holes may be formed between two power storage cells 10 adjacent to each other in the substrate. Fig. 16 is a diagram showing an example in which a plurality of through holes are formed between two power storage cells 10 adjacent to each other in the substrate. Five openings h22 are formed in recess R10 of an insulating substrate 201C shown in Fig. 16. Recess R10 is located between the electrode terminals of the Y-cell pair. Each of five openings h22 in recess R10 forms through hole h20, together with opening h12 located below opening h22 and extending through bottom wall 101 of lower case 100. The power storage device shown in Fig. 16 has five through holes h20 communicating with gas discharge path P1. Hydrophilic portion 201a is provided at an edge portion of each of five openings h22. The number of openings h22 located between the electrode terminals of the Y-cell pair can be changed as appropriate, and may be equal to or more than two and equal to or less than four, or may be equal to or more than six.

In the above-described embodiment, openings h22 are formed in all of the Y-cell pairs (see Figs. 7 and 12). This leads to a higher degree of freedom of designing the wiring pattern on insulating substrate 201. However, the present disclosure is not limited to the above. Openings h22 may be formed only in the prescribed Y-cell pairs. For example, no opening h22 may be formed below each of conductor members 221, 222 and 223.

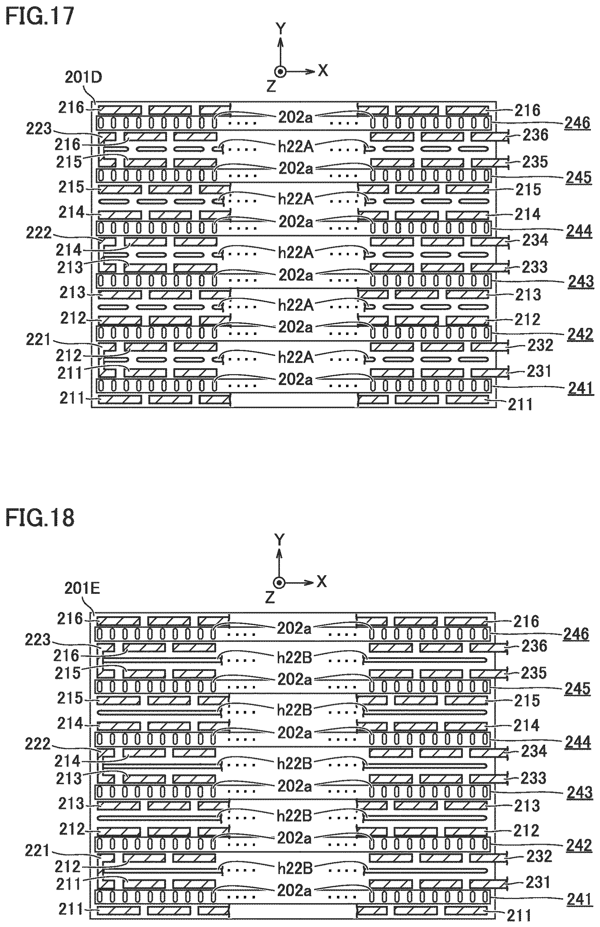

Fig. 17 is a diagram showing a first modification of the opening located between two power storage cells 10 adjacent to each other in the substrate. In an insulating substrate 201D shown in Fig. 17, each of a plurality of openings h22A is formed to extend over a plurality of Y-cell pairs. Opening h22A is longer in dimension in the X direction than opening h22 shown in Fig. 7. Opening h22A is formed like a slit and has a dimension in the X direction corresponding to three power storage cells 10. The dimension in the X direction of the opening in the substrate can be changed as appropriate, and may be a dimension corresponding to two power storage cells 10, or may be a dimension corresponding to four or more power storage cells 10.

Fig. 18 is a diagram showing a second modification of the opening located between two power storage cells 10 adjacent to each other in the substrate. In an insulating substrate 201E shown in Fig. 18, each of a plurality of openings h22B is formed to extend over the entire power storage stack. Opening h22B has a dimension from one end to the other end of the power storage stack in the X direction. One opening h22B formed to be elongated in the X direction is disposed between the power storage stacks adjacent to each other.

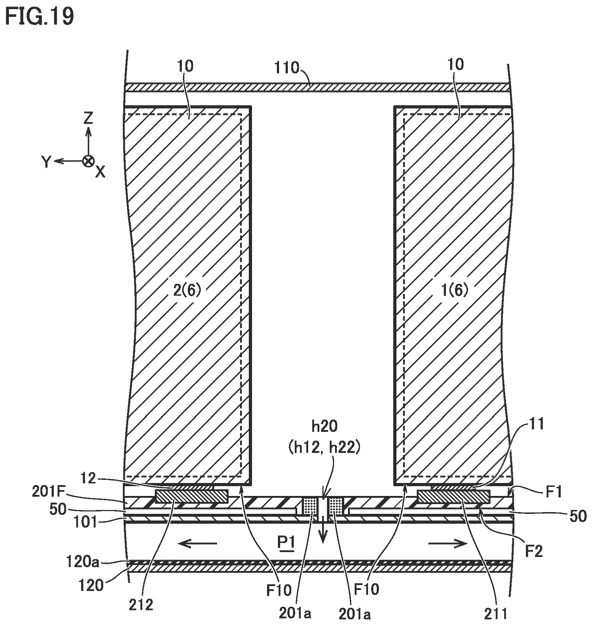

A cooler may be provided on the substrate. Fig. 19 is a diagram showing an example of a substrate including a cooler. One or more coolers 50 are provided on surface F2 (vertically lower surface) of an insulating substrate 201F shown in Fig. 19. Cooler 50 may be provided for each power storage stack. For example, insulating substrate 201F includes six coolers 50 (only two are shown) each formed to be elongated in the X direction. Cooler 50 is fixed to a recess formed in surface F2 of insulating substrate 201F. Cooler 50 is partially embedded in insulating substrate 201F. A part of cooler 50 is located in the vicinity of through hole h20. Cooler 50 cools the gas (e.g., the gas in gas discharge path P1) discharged from around valves 13 and from valves 13 in the Y-cell pair.

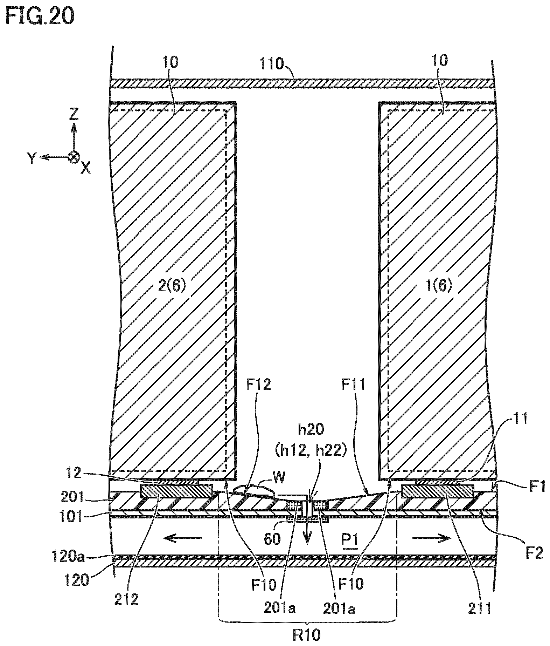

A water absorbing member may be provided between opening h22 formed in insulating substrate 201 and gas discharge path P1 located below opening h22. Fig. 20 is a diagram showing an example of a substrate including a water absorbing member. In the example shown in Fig. 20, a planar water absorbing member 60 is provided on an outer surface (-Z-side surface) of bottom wall 101 of lower case 100. Water absorbing member 60 is located below through hole h20 to close through hole h20. Water absorbing member 60 has water absorbing properties and absorbs water falling into through hole h20 from surface F1 of insulating substrate 201. The water absorbed by water absorbing member 60 is volatilized by wind and/or heat received from a fluid flowing through gas discharge path P1. When an amount of the water falling onto water absorbing member 60 exceeds a limit amount of water retention of water absorbing member 60, the water that is not absorbed by water absorbing member 60 falls into gas discharge path P1. By providing water absorbing member 60, an amount of the water falling into gas discharge path P1 can be reduced. Water absorbing member 60 may include fiber (e.g., polyester fiber) that absorbs water by the capillary action. Water absorbing member 60 may include fabric subjected to water-absorbing and quick-drying treatment.

Instead of or in addition to through hole h20, a protrusion may be provided on the substrate.

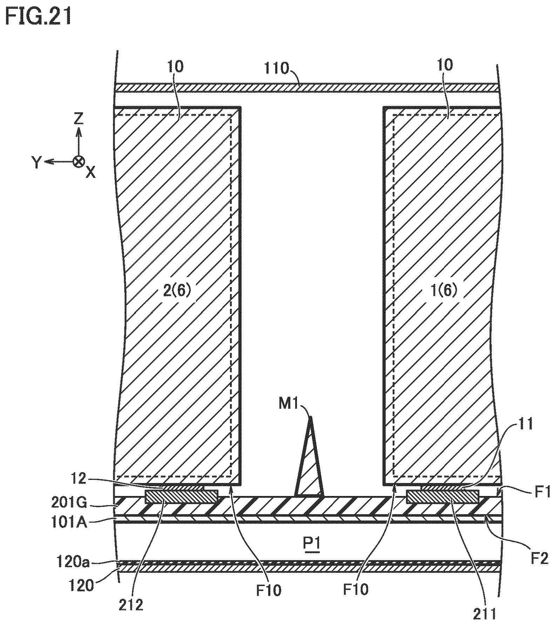

Fig. 21 is a diagram showing a first example in which a protrusion is provided between two power storage cells 10 adjacent to each other in the substrate. Through hole h20 described above is not formed in an insulating substrate 201G and a bottom wall 101A shown in Fig. 21. A protrusion M1 is fixed onto surface F1 of insulating substrate 201G. Protrusion M1 may be welded or bonded to insulating substrate 201G, or may be fastened to insulating substrate 201G. Alternatively, protrusion M1 may be formed integrally with insulating substrate 201G. Protrusion M1 is located between the electrode terminals of the Y-cell pair. A surface of protrusion M1 may be subjected to water repellant treatment. Protrusion M1 is higher in height than surface F10 of each of cell 1(6) and cell 2(6) constituting the Y-cell pair. A top of protrusion M1 is located on the +Z side of surfaces F10 of cell 1(6) and cell 2(6). Because of the presence of protrusion M1 between the electrode terminals of cell 1(6) and cell 2(6) adjacent to each other, even when water is generated in one power storage cell of these power storage cells, spreading of the water to the other power storage cell is suppressed. This makes it less likely to cause a short circuit between the electrode terminals of the power storage cells adjacent to each other.

In the example shown in Fig. 21, one protrusion M1 is provided between the electrode terminals of the Y-cell pair. However, the number of the protrusions provided between the electrode terminals of the Y-cell pair can be changed as appropriate, and may be equal to or more than two and equal to or less than five, or may be equal to or more than six.

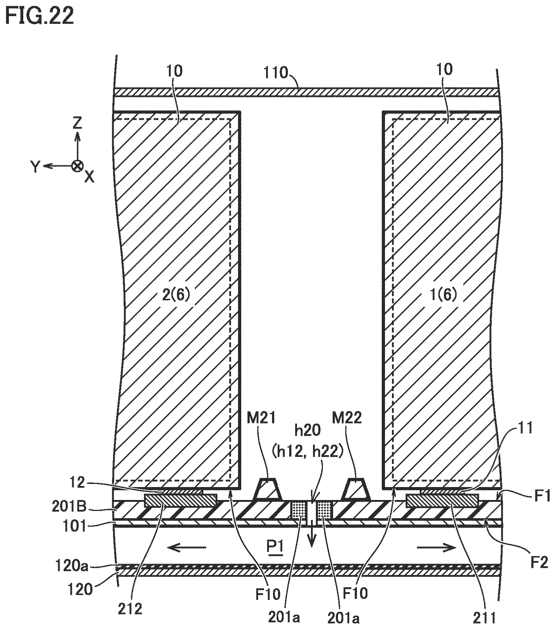

Fig. 22 is a diagram showing a second example in which a protrusion is provided between two power storage cells 10 adjacent to each other in the substrate. In the example shown in Fig. 22, protrusions M21 and M22 are fixed onto surface F1 of insulating substrate 201B shown in Fig. 15. In addition, through hole h20 is provided between protrusion M21 and protrusion M22 in the Y direction. These protrusion M21, protrusion M22 and through hole h20 suppress a short circuit between the electrode terminals of cell 1(6) and cell 2(6) adjacent to each other. Each of protrusions M21 and M22 and insulating substrate 201B may be separately formed and joined, or may be integrally formed in a seamless manner.

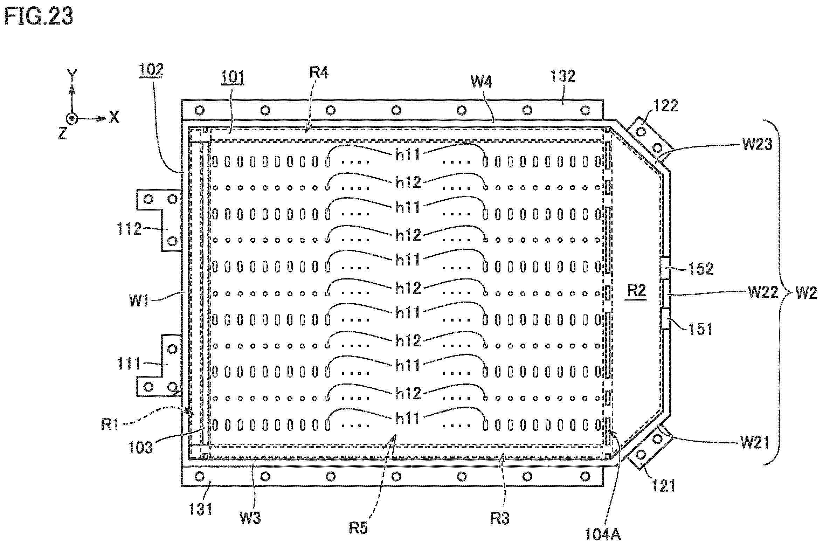

In the above-described embodiment, the openings through which conductor members 231 to 236 extend are formed in partition wall 104 (see Fig. 9). However, the present disclosure is not limited to the above. Partition wall 104 may be divided. Fig. 23 is a diagram showing a modification of the partition wall. A partition wall 104A shown in Fig. 23 is configured by a plurality of partition plates. No partition plates are provided in portions corresponding to conductor members 231 to 236. Conductor members 231 to 236 can cross, in the X direction, spaces between the partition plates arranged in the Y direction. Alternatively, an electric wire (e.g., a cable) connecting to wiring board 200 may extend above partition wall 104 shown in Fig. 3 and be connected to battery circuit unit 30. A device cooler (including cooling pipe 23) that cools battery circuit unit 30 may be provided below battery circuit unit 30. It is not essential to dispose, between the power storage cells adjacent to each other, a cell cooler (e.g., cooler 22C) that cools the power storage cells. The cell cooler may be provided above the power storage cells. The cell cooler may be provided to cover the upper surfaces of all of the power storage cells. Partition walls 103 and 104 shown in Fig. 3 are not essential configurations. At least one of partition walls 103 and 104 may be omitted. At least one of gas discharge valves 151 and 152 may be omitted. The gas flowing through each of the gas discharge paths may be discharged outside power storage device B through the gas discharge hole (e.g., gas discharge hole 151a). The discharged gas may be guided to a prescribed place by a duct provided outside the housing of power storage device B.

Various features relating to the above-described power storage device (features described in the embodiment and the modifications) may be applied in any combination.

The purpose of use of the power storage device is not particularly limited. The power storage device may be used in a vehicle other than a car (an electric motorcycle, an electric wheelchair, a railway vehicle, a ship, an airplane, an electric vertical takeoff and landing aircraft (eVTOL), an amphibious aircraft, or the like), a mobile machine (an agricultural machine, a construction machine, or the like), an unmanned movable body (an automated guided vehicle (AGV), a mobile robot, a drone, a robot cleaner, a space probe, or the like), a wearable robot, a stationary robot (e.g., an industrial robot), or a building (a house, a factory, or the like).

Although the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A power storage device (B) comprising:
a first power storage cell (10, 1(6));
a second power storage cell (10, 2(6)); and
a wiring board (200), wherein
the wiring board includes a substrate (201, 201A to 201G), and a plurality of conductor members (211 to 216, 221 to 223, 231 to 236) provided on a vertically upper surface (F1) of the substrate,
the plurality of conductor members include a first conductor member (211) and a second conductor member (212),
the first power storage cell includes, on a vertically lower surface (F10) thereof, a first electrode terminal (11) connected to the first conductor member,
the second power storage cell includes, on a vertically lower surface (F10) thereof, a second electrode terminal (12) connected to the second conductor member, and
at least one of a protrusion (M1, M21, M22), a recess (R10, R10A) and a through hole (h22, h22A, h22B) is provided in a portion of the substrate between the first electrode terminal and the second electrode terminal.

2. The power storage device according to claim 1, wherein
one or more through holes (h22, h22A, h22B) are formed in the portion of the substrate (201, 201A to 201F) between the first electrode terminal and the second electrode terminal.

3. The power storage device according to claim 2, wherein
the substrate (201, 201A to 201C, 201F) includes one or more first portions (201a) located at edge portions of the one or more through holes (h22), and a second portion higher in degree of hydrophobicity than the first portions.

4. The power storage device according to claim 2, wherein
the substrate (201, 201C) includes a first inclined portion (F11) inclined downward from the first electrode terminal toward the one or more through holes (h22), and a second inclined portion (F 12) inclined downward from the second electrode terminal toward the one or more through holes (h22).

5. The power storage device according to claim 2, wherein
a recess (R10, R10A) is formed in the portion of the substrate between the first electrode terminal and the second electrode terminal, and
the one or more through holes (h22) are formed in the recess.

6. The power storage device according to any one of claims 2 to 5, wherein
the power storage device includes a gas discharge path (P1) through which a gas discharged from each of the first power storage cell and the second power storage cell flows, and
the one or more through holes (h22) communicate with the gas discharge path.

7. The power storage device according to claim 6, wherein
a water absorbing member (60) is provided between the one or more through holes (h22) and the gas discharge path (P1).

8. The power storage device according to claim 6, wherein
each of the first power storage cell and the second power storage cell further includes an explosion-proof valve (13) on the vertically lower surface (F10) thereof,
the substrate (201F) is located on a vertically lower side of the explosion-proof valve of each of the first power storage cell and the second power storage cell,
the gas discharge path (P1) is located on a vertically lower side of the substrate, and
a cooler (50) is provided on a vertically lower surface (F2) of the substrate.

9. The power storage device according to claim 1, wherein
one or more protrusions (M1, M21, M22) are formed in the portion of the substrate (201B, 201G) between the first electrode terminal and the second electrode terminal.
